# EUROPEAN PATENT SPECIFICATION

(11) **EP 3 707 108 B1**
(45) Date of publication and mention of the grant of the patent: **11.10.2023**
(21) Application number: 18793688.5
(22) Date of filing: 05.11.2018
(51) Int. Cl.: C04B 28/00, C04B 40/00

(54) **MICROSILICA FOR IMPROVING THE FLOWABILITY OF A GEOPOLYMER SUSPENSION**
MIKROKIESELERDE ZUR VERBESSERUNG DER FLIESSFÄHIGKEIT EINER GEOPOLYMERSUSPENSION
MICROSILICE PERMETTANT D'AMÉLIORER LA FLUIDITÉ D'UNE SUSPENSION DE GÉOPOLYMÈRE

(30) Priority: 10.11.2017 EP 17201172
(43) Date of publication of application: 16.09.2020
(73) Proprietor: Sika Technology AG, 6340 Baar (CH)
(72) Inventor: PULKIN, Maxim, 83308 Trostberg (DE); NICOLEAU, Luc, 77410 Villevaude (FR); MITKINA, Tatiana, 83308 Trostberg (DE)
(74) Representative: Sika Patent Attorneys
(86) International application number: PCT/EP2018/080095
(87) International publication number: WO 2019/091888

(56) References cited:
- EP-A1- 2 868 637
- WO-A1-2014/067721
- WO-A1-2014/141051
- WO-A1-2015/043805

## Description

The present invention relates to an additive mixture comprising at least one cationic polymer and zirconium-containing microsilica; to a geopolymer suspension comprising said additive mixture; to a process for preparing a geopolymer construction material comprising said additive mixture; and to a geopolymer construction material obtainable by said process.

In order to improve the flowability of inorganic binder systems, rheology modifiers are typically used in the art. Also dispersants may improve the flowability of inorganic binder systems because an improvement of the dispersibility of the inorganic binder particles in water heightens the flowability and prevents the heightened flowability from degradation by aging. Furthermore, plasticizers (water reducers) can be added to improve workability of inorganic binder systems. It is to be understood that compounds improving the flowability of inorganic binder systems may be classified as rheology modifiers, dispersants and/or plasticizers.

EP 0 214 412 A1 discloses napthalenesulphonic acid/formaldehyde copolymers as dispersants for cementitious systems for improving the flowability. DE 1671017 A discloses melaminesulphonates, which can be used to improve the properties of a binder system. Another important class of dispersants/plasticizers includes polycarboxylates. Their use as dispersant in cementitious systems is, e.g., disclosed in US 5,707,445 B1, EP 1 100 981 A2 and EP 1 142 847 A2.

The activity of the above mentioned polycarboxylates derives from two different effects, in particular if the polycarboxylates have a comb-like structure and contain polyoxyalkylene groups. Firstly, the negatively charged acid groups of the plasticizers adsorb on the cement grain surface, which is positively charged through calcium ions. The electrostatic double layer formed in this way results in electrostatic repulsion between the particles, which is relatively weak, however. Secondly, this electrostatic repulsion is additionally reinforced by the steric bulk of the non-adsorbing polyoxyalkylene groups. This steric repulsion is much stronger than the electrostatic repulsion. Accordingly, the plasticizing effect of the polycarboxylates is much greater than that of the naphthalene- or melaminesulphonates. In other words, in order to obtain comparable plasticization, the polycarboxylate can be added at a significantly lower rate.

However, it has been found that geopolymer systems exhibit distinct differences relative to cementitious systems, these differences making it more difficult or impossible to use the above mentioned plasticizers. For example, in order to obtain acceptable hardening times, the reactive oxide components of the geopolymer systems require strong alkaline activation. This higher level of alkalinity imposes particular requirements on the dispersants. Furthermore, geopolymer systems as low-calcium systems generally do not have any positively charged grain surfaces. Instead, the surfaces are silicate or SiO₂ surfaces, which are often negatively charged at the relevant pH values. Moreover, the high level of alkalinity that is required for activation also constitutes a high salt load, which may annul a dispersion effect that is possible at lower pH levels.

In order to address this issue, WO 2012/076365 discloses cationic polymers which are quite promising for dispersing geopolymer binder systems exhibiting negatively charged grain surfaces. WO 2013/152963 A1 discloses polyaromatic ethers containing e.g. salicylic acid, and WO 2015/043805 A1 discloses further cationic polymers for dispersing geopolymer binder systems.

However, the flowability of geopolymer suspensions comprising the above cationic polymers is still not optimal. For example, although the yield point of a geopolymer suspension can be reduced in the presence of cationic polymers, the use of the above mentioned cationic polymers at the same time leads to an increased viscosity of the geopolymer suspension, which is not desired.

Accordingly, it was an object of the present invention to provide an improved additive for improving the flowability of geopolymer suspensions.

It has surprisingly been found that the above objects can be achieved by the present invention, which is described hereafter.

The present invention relates to an additive mixture for a geopolymer suspension comprising
(i) at least one cationic polymer, wherein the at least one cationic polymer (i) comprises
   a) 1 to 99 mol-% of a cationic structural unit of formula (I) 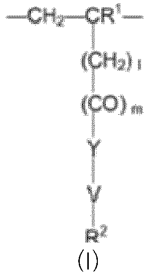 wherein
      R¹ in each occurrence is the same or different and represents hydrogen and/or methyl,
      R² in each occurrence is the same or different and is selected from the group consisting of 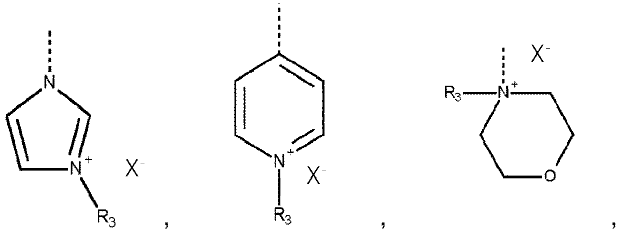 and/or 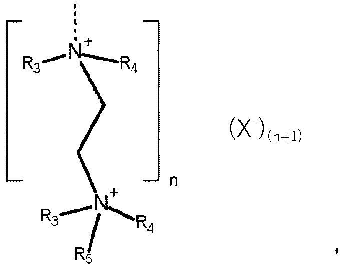 wherein
         R³, R⁴, and R⁵ in each occurrence are the same or different and each independently represent hydrogen, an aliphatic hydrocarbon moiety having 1 to 20 carbon atoms, a cycloaliphatic hydrocarbon moiety having 5 to 8 carbon atoms, aryl having 6 to 14 carbon atoms and/or a polyethylene glycol (PEG) moiety,
         I in each occurrence is the same or different and represents an integer from 0 to 2,
         m in each occurrence is the same or different and represents 0 or 1,
         n in each occurrence is the same or different and represents an integer from 0 to 10,
         Y in each occurrence is the same or different and represents an absent group, oxygen, NH, and/or NR³,
         V in each occurrence is the same or different and represents -(CH₂)ₓ-, 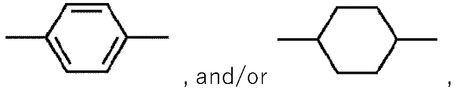 wherein
         x in each occurrence is the same or different and represents an integer from 0 to 6, and
         X in each occurrence is the same or different and represents a halogen atom, a C₁-C₄-alkyl sulfate, a C₁-C₄-alkyl sulfonate, a C₆-C₁₄-(alkyl)aryl sulfonate and/or a monovalent equivalent of a polyvalent anion, which is selected from a sulfate, a disulfate, a diphosphate, a triphosphate, and/or a polyphosphate; and optionally
   b) 1 to 99 mol-% of a macromonomeric structural unit of formula (II) 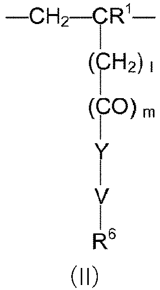 wherein
      R⁶ in each occurrence is the same or different and represents a polyoxyalkylene group of the following formula (Ila) 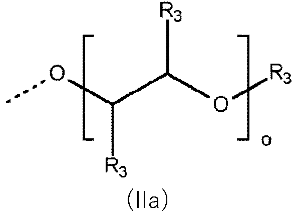 wherein
      o in each occurrence is the same or different and represents an integer from 1 to 300, and
      R¹, R³, I, m, Y, V, and x have the meanings given above, provided that in both structural units (I) and (II), Y represents an absent group when x is 0; and
(ii) zirconium-containing microsilica.

It has surprisingly been found that the addition of microsilica containing zirconium, is suitable for improving the flowability of a geopolymer suspension. Furthermore, it has surprisingly been found that an additive mixture comprising a cationic polymer in combination with zirconium-containing microsilica is particularly advantageous for improving the flowability of a geopolymer suspension.

In a further embodiment, the present invention relates to a geopolymer suspension comprising the additive mixture according to the invention, i.e. an additive mixture comprising
(i) at least one cationic polymer, wherein the at least one cationic polymer (i) comprises
   a) 1 to 99 mol-% of a cationic structural unit of formula (I) 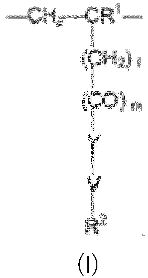 wherein
      R¹ in each occurrence is the same or different and represents hydrogen and/or methyl,
      R² in each occurrence is the same or different and is selected from the group consisting of 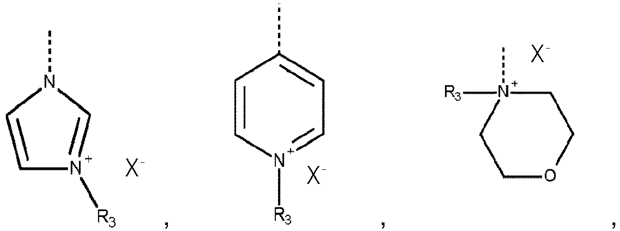 and/or 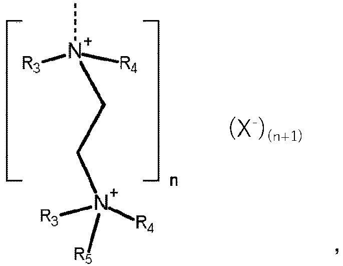 wherein
         R³, R⁴, and R⁵ in each occurrence are the same or different and each independently represent hydrogen, an aliphatic hydrocarbon moiety having 1 to 20 carbon atoms, a cycloaliphatic hydrocarbon moiety having 5 to 8 carbon atoms, aryl having 6 to 14 carbon atoms and/or a polyethylene glycol (PEG) moiety,
         I in each occurrence is the same or different and represents an integer from 0 to 2,
         m in each occurrence is the same or different and represents 0 or 1,
         n in each occurrence is the same or different and represents an integer from 0 to 10,
         Y in each occurrence is the same or different and represents an absent group, oxygen, NH, and/or NR³,
         V in each occurrence is the same or different and represents -(CH₂)ₓ-, 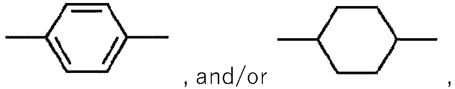 wherein
         x in each occurrence is the same or different and represents an integer from 0 to 6, and
         X in each occurrence is the same or different and represents a halogen atom, a C₁-C₄-alkyl sulfate, a C₁-C₄-alkyl sulfonate, a C₆-C₁₄-(alkyl)aryl sulfonate and/or a monovalent equivalent of a polyvalent anion, which is selected from a sulfate, a disulfate, a diphosphate, a triphosphate, and/or a polyphosphate; and optionally
   b) 1 to 99 mol-% of a macromonomeric structural unit of formula (II) 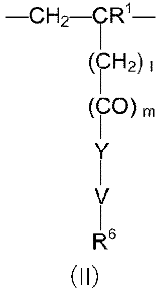 wherein
      R⁶ in each occurrence is the same or different and represents a polyoxyalkylene group of the following formula (Ila) 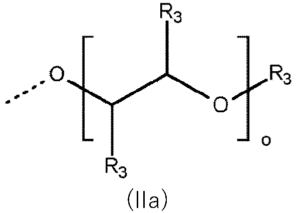 wherein
      o in each occurrence is the same or different and represents an integer from 1 to 300, and
      R¹, R³, I, m, Y, V, and x have the meanings given above, provided that in both structural units (I) and (II), Y represents an absent group when x is 0; and
(ii) zirconium-containing microsilica; and
(iii) at least one inorganic binder mixture comprising
   (iiia) at least one inorganic binder selected from the group consisting of latent hydraulic binders, pozzolanic binders, and mixtures thereof, wherein the pozzolanic binders are selected from ground glass, metakaolin, aluminosilicates, fly ash, natural pozzolans such as tuff, trass and volcanic ash, natural and synthetic zeolites and mixtures thereof and
   (iiib) at least one alkaline activator selected from the group consisting of alkali metal hydroxides, alkali metal carbonates, alkali metal fluorides, alkali metal aluminates, alkali metal silicates, and mixtures thereof; and
(iv) water.

The geopolymer suspension of the invention is particularly advantageous in terms of the flowability properties.

In yet a further embodiment, the present invention relates to a process for preparing a geopolymer construction material comprising the additive mixture according to the invention, i.e. an additive mixture comprising
(i) at least one cationic polymer, wherein the at least one cationic polymer (i) comprises
   a) 1 to 99 mol-% of a cationic structural unit of formula (I) 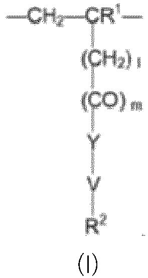 wherein
      R¹ in each occurrence is the same or different and represents hydrogen and/or methyl,
      R² in each occurrence is the same or different and is selected from the group consisting of 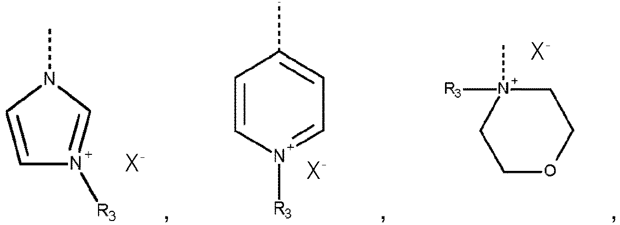 and/or 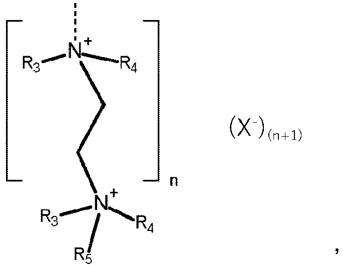 wherein
         R³, R⁴, and R⁵ in each occurrence are the same or different and each independently represent hydrogen, an aliphatic hydrocarbon moiety having 1 to 20 carbon atoms, a cycloaliphatic hydrocarbon moiety having 5 to 8 carbon atoms, aryl having 6 to 14 carbon atoms and/or a polyethylene glycol (PEG) moiety,
         I in each occurrence is the same or different and represents an integer from 0 to 2, m in each occurrence is the same or different and represents 0 or 1,
         n in each occurrence is the same or different and represents an integer from 0 to 10,
         Y in each occurrence is the same or different and represents an absent group, oxygen, NH, and/or NR³,
         V in each occurrence is the same or different and represents -(CH₂)ₓ-, 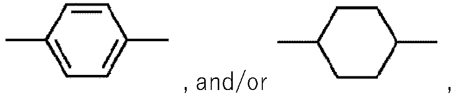 wherein
         x in each occurrence is the same or different and represents an integer from 0 to 6, and
         X in each occurrence is the same or different and represents a halogen atom, a C₁-C₄-alkyl sulfate, a C₁-C₄-alkyl sulfonate, a C₆-C₁₄-(alkyl)aryl sulfonate and/or a monovalent equivalent of a polyvalent anion, which is selected from a sulfate, a disulfate, a diphosphate, a triphosphate, and/or a polyphosphate; and optionally
   b) 1 to 99 mol-% of a macromonomeric structural unit of formula (II) 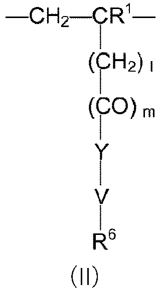 wherein
      R⁶ in each occurrence is the same or different and represents a polyoxyalkylene group of the following formula (Ila) 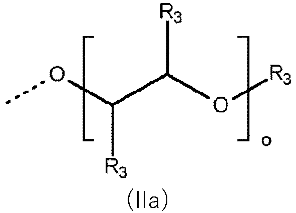 wherein
      o in each occurrence is the same or different and represents an integer from 1 to 300, and
      R¹, R³, I, m, Y, V, and x have the meanings given above, provided that in both structural units (I) and (II), Y represents an absent group when x is 0;
(ii) zirconium-containing microsilica; and
(iii) at least one inorganic binder mixture comprising
   (iiia) at least one inorganic binder selected from the group consisting of latent hydraulic binders, pozzolanic binders, and mixtures thereof, wherein the pozzolanic binders are selected from ground glass, metakaolin, aluminosilicates, fly ash, natural pozzolans such as tuff, trass and volcanic ash, natural and synthetic zeolites and mixtures thereof and
   (iiib) at least one alkaline activator selected from the group consisting of alkali metal hydroxides, alkali metal carbonates, alkali metal fluorides, alkali metal aluminates, alkali metal silicates, and mixtures thereof; and
(iv) water,
   wherein the process comprises the steps of
   (1) mixing components (i), (ii), (iiia), (iiib) and (iv), and
   (2) hardening and optionally drying the resulting formulation.

In yet a further embodiment, the present invention relates to a geopolymer construction material obtainable by said process.

The process is advantageous due to the improved flowability of the geopolymer suspension obtained in step (1) of the process, which allows for an improved workability of the suspension prior to the hardening step (2). The geopolymer construction material obtainable by the process of the invention has improved properties due to the presence of the additive mixture in the process of preparing the geopolymer construction material.

Further details regarding the present invention are described hereinafter. It is to be understood that the preferred embodiments as defined hereinafter are preferred alone as well as in combination with each other. Furthermore, if not specified otherwise, the preferred embodiments independently apply to
the additive mixture comprising at least one cationic polymer and zirconium-containing microsilica;
the geopolymer suspension comprising said additive mixture;
the process for preparing a geopolymer construction material comprising said additive mixture; and
the geopolymer construction material obtainable by said process.

As used herein, the term "wt.-%" refers to the ratio of the mass of the respective component in relation to the sum of the mass of all components in percent, if not stated otherwise. The term "vol.-%" refers to the ratio of the volume of the respective component in relation to the sum of the volume of all components in percent.

It is moreover intended that in each actual case the sum of all of the percentages of the specified and unspecified constituents of the formulation of the invention is always 100 %.

The meaning of the term "comprising" is to be interpreted as encompassing all the specifically mentioned features as well optional, additional, unspecified ones, whereas the term "consisting of" only includes those features as specified.

Microsilica is a fine powder, mainly comprising amorphous SiO₂ powder and is a by-product of silicon, zirconium, or ferrosilicon production. The particles have a diameter of about 100 nm and a specific surface area of from about 15 to about 30 m²g⁻¹. The properties of the microsilica may depend on the production method, as the microsilica preferably contains traces of other components from the production method.

In this regard, it is according to the invention that the microsilica contains zirconium. Furthermore, it is preferred that the microsilica is obtained from zirconium production. In a preferred embodiment, the microsilica contains from 0.05 to 10 wt.-%, preferably from 0.1 to 5 wt.-% of ZrO₂. It is preferred that the zirconium-containing microsilica comprises particles having a specific surface area of from 5 to 30 m²g⁻¹, preferably determined according to DIN ISO 9277 (January 2014).

According to the present invention, the microsilica improves the flowability of a geopolymer suspension. An improvement of flowability of the geopolymer suspension can be determined by comparative Hägermann cone measurements according to DIN EN 1015-3 (May 2007). An improvement of flowability leads to an increase in cone size.

The term "geopolymer suspension" refers to a suspension comprising the inorganic binder mixture and water, before hardening takes place to obtain a geopolymer construction material.

Regarding the inorganic binder mixture, the following definitions are relevant.

A latent hydraulic binder refers to a binder that only becomes hydraulic when exposed to an alkaline activator.

For the purposes of the present invention, a "latent hydraulic binder" is preferably a binder in which the molar ratio (CaO + MgO) : SiO₂ is from 0.8 to 2.5 and particularly from 1.0 to 2.0. In general terms, the above-mentioned latent hydraulic binders can be selected from industrial and/or synthetic slag, in particular from blast furnace slag, electrothermal phosphorous slag, steel slag and mixtures thereof, and the "pozzolanic binders" can generally be selected from ground glass, metakaolin, aluminosilicates, fly ash, preferably brown-coal fly ash and hard-coal fly ash, natural pozzolans such as tuff, trass and volcanic ash, natural and synthetic zeolites and mixtures thereof.

As used herein, the term "slag" refers to the by-product of a smelting process, or synthetic slag. The main use of a smelting process is to convert an ore, scrap or a material mixture containing different metals into a form from which the desired metals can be skimmed as a metal layer and the undesired metal oxides, e.g. silicates, alumina, etc., remain as the slag.

Blast furnace slag (BFS) is formed as a by-product during the smelting of iron ore in the blast-furnace. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depend on origin and treatment method, and grinding fineness influences reactivity here. The Blaine value is used as parameter for grinding fineness, and typically has an order of magnitude of from 200 to 1000 m² kg⁻¹, preferably from 300 to 500 m² kg⁻¹. Finer milling gives higher reactivity. For the purposes of the present invention, the expression "blast furnace slag" is however intended to comprise materials resulting from all of the levels of treatment, milling, and quality mentioned (i.e. BFS, GBFS and GGBFS). Blast furnace slag generally comprises from 30 to 45 % by weight of CaO, about 4 to 17 % by weight of MgO, about 30 to 45% by weight of SiO₂ and about 5 to 15 % by weight of Al₂O₃, typically about 40% by weight of CaO, about 10 % by weight of MgO, about 35 % by weight of SiO₂ and about 12% by weight of Al₂O₃.

Metakaolin is produced when kaolin is dehydrated. Whereas at from 100 to 200 ° C kaolin releases physically bound water, at from 500 to 800 ° C a dehydroxylation takes place, with collapse of the lattice structure and formation of metakaolin (Al₂Si₂O₇). Accordingly, pure metakaolin comprises about 54 % by weight of SiO₂ and about 46 % by weight of Al₂O₃.

Aluminosilicates are minerals comprising aluminum, silicon, and oxygen, which may be expressed by referring to the SiO₂ and Al₂O₃ content. They are a major component of kaolin and other clay minerals. Andalusite, kyanite, and sillimanite are naturally occurring aluminosilicate minerals that have the composition Al₂SiO₅.

Fly ash is produced inter alia during the combustion of coal in power stations and comprises fine particles of varying composition. The main ingredients of fly ash are silicon oxide, aluminum oxide, and calcium oxide. Class C fly ash (brown-coal fly ash) comprises according to WO 08/012438 about 10 wt.-% CaO, whereas class F fly ash (hard-coal fly ash) comprises less than 8 % by weight, preferably less than 4 % by weight, and typically about 2 % by weight of CaO.

As mentioned above, an alkaline activator is required, so that the latent hydraulic binder becomes hydraulic. The alkaline activator is selected from the group consisting of aqueous solutions of alkali metal carbonates, alkali metal fluorides, alkali metal hydroxides, alkali metal aluminates and/or alkali metal silicates.

It is preferred to select an alkaline activator from alkali metal hydroxides of the formula MOH and alkali metal silicates of the formula m SiO₂ x n M₂O, where M is the alkali metal, preferably Li, Na or K or a mixture thereof, and the molar ratio m:n is ≤ 4.0, preferably ≤ 3.0, with further preference ≤ 2.0, in particular ≤ 1.70, and with very particular preference ≤ 1.20.

The alkali metal silicate is preferably water glass, particularly preferably an aqueous water glass and in particular a sodium water glass or potassium water glass. However, it is also possible to use lithium water glass or ammonium water glass, or a mixture of the water glasses mentioned. The m:n ratio stated above (also termed "modulus") should preferably not be exceeded, since otherwise reaction of the components is likely to be incomplete. It is also possible to use very much smaller moduli, for example about 0.2. Water glasses with higher moduli should be adjusted before use to moduli in the range of the invention by using a suitable aqueous alkali metal hydroxide.

The term "water glass" refers to alkali metal silicates, which are water soluble. Water glass can be obtained by the reaction of alkali metal carbonates with quartz sand (silicon dioxide). However, they can also be produced from mixtures of reactive silicas with the appropriate aqueous alkali metal hydroxides. Non-limiting examples of water glass comprise Na₂SiO₃, K₂SiO₃, and Li₂SiO₃. In addition to the anhydrous form, various hydrates of water glass exist as well. Typical trace impurities are based on the elements Al, Ca, Cr, Cu, Fe, Mg, and Ti. The ratio of alkali metal to silicate can vary. This ratio is defined in terms of the molar ratio of m SiO₂ to n M₂O as mentioned above. Typical values for the ratio m : n are values smaller than 4, smaller than 3, smaller than 2, or smaller than 1.7.

Potassium water glasses in the advantageous modulus range are mainly marketed as aqueous solutions because they are very hygroscopic; sodium water glasses in the advantageous modulus range are also obtainable commercially as solids. The solids contents of the aqueous water glass solutions are generally from 20% by weight to 60% by weight, preferably from 30 to 50% by weight.

The preferred quantity of the alkaline activator to be combined with the latent hydraulic binder is from 1 to 55% by weight and in particular from 20 to 50% by weight based on the geopolymer suspension, where these data relate to solids contents.

The term "water" as used herein, can refer to pure, deionized H₂O, or water containing up to 0.1 wt.-% impurities and/or salts, such as normal tap water.

The advantageous effects of the microsilica for improving the flowability of a geopolymer suspension can be further improved by using an additive mixture additionally comprising at least one cationic polymer as defined above. In this regard, it is preferred that the cationic polymer (i) and the zirconium-containing microsilica (ii) are present in a weight ratio of from 1:3 to 1:200, preferably from 1:5 to 1:100.

In a preferred embodiment, the at least one cationic polymer (i) further comprises at least one macromonomeric structural unit (II) comprising at least one polyoxyalkylene group (Ila). Preferred polyoxyalkylene groups include polyoxyethylene groups, polyoxypropylene groups, and combinations thereof. In particular, the oxyalkylene units of the polyoxyalkylene group is preferably selected from ethylene oxide groups and/or propylene oxide groups, which may be arranged randomly, alternatingly, graduatedly and/or blockwise within the polyoxyalkylene group.

In yet another preferred embodiment, the at least one polyoxyalkylene group (IIa) is a polyoxyethylene or a polyoxypropylene group, and/or wherein each polyoxyalkylene group (Ila) comprises from 1 to 300, preferably from 5 to 300, more preferably from 10 to 200, and in particular from 20 to 100 oxyalkylene units.

It is to be understood that the at least one polyoxyalkylene group as defined above is chemically bonded within the structural unit (II) of the cationic polymer. The structural unit (II) is formed from a monomer component (B), which comprises the at least one polyoxyalkylene group, i.e. wherein the at least one polyoxyalkylene group is chemically bonded within the monomer component (B). Thus, the polyoxyalkylene groups are preferably present as side chains attached to the structural units (II) in the polymer chain.

It is preferred that the monomer component (B) forming the macromonomeric structural unit (II) is selected from the group consisting of ethene, vinyl ethers, vinyloxy C₁-C₆-alkyl ethers, propene, allyl ethers, methallyl ethers, butadiene, 3-butenyl ethers, isoprenyl ethers, styrene, acrylic esters, methacrylic esters, acrylamides, methacrylamides and mixtures thereof, which comprise the at least one polyoxyalkylene group as a substituent. In particular, it is to be understood that the polyoxyalkylene group is present as a substituent at the above mentioned monomers and is either directly attached or bonded via a linker, e.g. an alkyl, cycloalkyl or aryl linker.

The at least one cationic polymer (i) comprises
a) 1 to 99 mol-% of a cationic structural unit of formula (I) 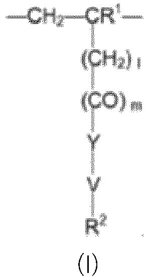 wherein
   R¹ in each occurrence is the same or different and represents hydrogen and/or methyl,
   R² in each occurrence is the same or different and is selected from the group consisting of 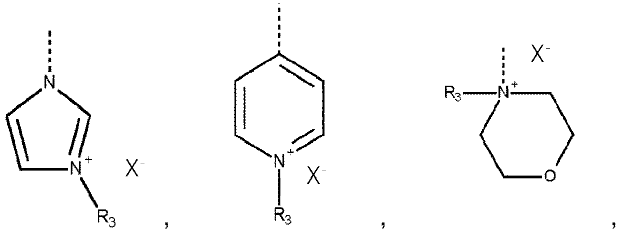 and/or 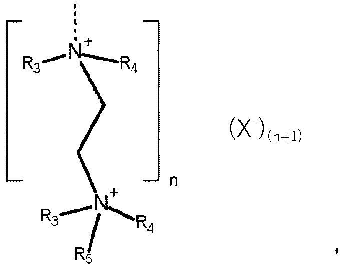 wherein
      R³, R⁴, and R⁵ in each occurrence are the same or different and each independently represent hydrogen, an aliphatic hydrocarbon moiety having 1 to 20 carbon atoms, a cycloaliphatic hydrocarbon moiety having 5 to 8 carbon atoms, aryl having 6 to 14 carbon atoms and/or a polyethylene glycol (PEG) moiety,
      l in each occurrence is the same or different and represents an integer from 0 to 2,
      m in each occurrence is the same or different and represents 0 or 1,
      n in each occurrence is the same or different and represents an integer from 0 to 10,
      Y in each occurrence is the same or different and represents an absent group, oxygen, NH, and/or NR³,
      V in each occurrence is the same or different and represents -(CH₂)ₓ-, 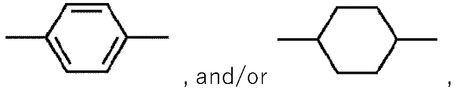 wherein
      x in each occurrence is the same or different and represents an integer from 0 to 6, and
      X in each occurrence is the same or different and represents a halogen atom, a C₁-C₄-alkyl sulfate, a C₁-C₄-alkyl sulfonate, a C₆-C₁₄-(alkyl)aryl sulfonate and/or a monovalent equivalent of a polyvalent anion, which is selected from a sulfate, a disulfate, a diphosphate, a triphosphate, and/or a polyphosphate; and optionally
b) 1 to 99 mol-% of a macromonomeric structural unit of formula (II) 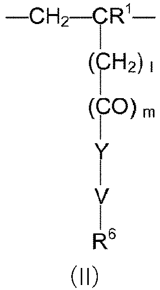 wherein
   R⁶ in each occurrence is the same or different and represents a polyoxyalkylene group of the following formula (Ila) 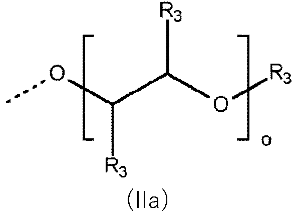 wherein
   o in each occurrence is the same or different and represents an integer from 1 to 300, and
   R¹, R³, I, m, Y, V, and x have the meanings given above,
   provided that in both structural units (I) and (II), Y represents an absent group when x is 0.

Particularly, the structural units (I) and (II) may be present randomly, alternatingly, graduatedly and/or blockwise within the polymeric main chain.

It is preferred that the monomer component (B) forming the macromonomeric structural unit (II) is selected from the group consisting of ethene, vinyl ethers, vinyloxy C₁-C₆-alkyl ethers, propene, allyl ethers, methallyl ethers, butadiene, 3-butenyl ethers, isoprenyl ethers, styrene, acrylic esters, methacrylic esters, acrylamides, methacrylamides and mixtures thereof, which comprise the at least one polyoxyalkylene group as a substituent. In particular, it is to be understood that the polyoxyalkylene group is present as a substituent at the above mentioned monomers and is either directly attached or bonded via a linker, e.g. an alkyl, cycloalkyl or aryl linker.

It is preferred that the at least one cationic polymer comprises 10 to 90 mol-% of the cationic structural unit (I) and 90 to 10 mol-% of the macromonomeric structural unit (II), preferably 25 to 75 mol-% of the cationic structural unit (I) and 75 to 25 mol-% of the macromonomeric structural unit (II), and in particular 40 to 60 mol-% of the cationic structural unit (I) and 60 to 40 mol-% of the macromonomeric structural unit (II).

It is more preferred that the at least one cationic polymer has a molecular weight in the range of from 1000 to 500000 g/mol, preferably 2000 to 150000 g/mol, and in particular 4000 to 100000 g/mol.

As mentioned above, in one embodiment, the invention further relates to a geopolymer suspension comprising the above defined additive mixture, and
(iii) at least one inorganic binder mixture comprising
   (iiia) at least one inorganic binder selected from the group consisting of latent hydraulic binders, pozzolanic binders, wherein the pozzolanic binders are selected from ground glass, metakaolin, aluminosilicates, fly ash, natural pozzolans such as tuff, trass and volcanic ash, natural and synthetic zeolites and mixtures thereof and mixtures thereof, and
   (iiib) at least one alkaline activator selected from the group consisting of alkali metal hydroxides, alkali metal carbonates, alkali metal fluorides, alkali metal aluminates, alkali metal silicates, and mixtures thereof; and
(iv) water.

Particularly preferably, the at least one inorganic binder is selected from the group consisting of blast furnace slag, metakaolin, aluminosilicates, fly ash, and mixtures thereof.

Preferred embodiments regarding the additive mixture of the invention have also been defined above.

It is particularly preferred that the geopolymer suspension comprises the zirconium-containing microsilica in an amount of from 1 to 20 vol.-%, even more preferably in an amount of from 3 to 15 vol.-% based on the total volume of the solids in the suspension. It is further particularly preferred that the geopolymer suspension comprises the cationic polymer in an amount of from 0.01 to 10 vol.-%, preferably in an amount of from 0.5 to 5 vol.-% based on the total volume of the solids in the suspension.

It is preferred that the geopolymer suspension comprises
(i) the cationic polymer in an amount of from 0.01 to 10 wt.-%,
(ii) the zirconium-containing microsilica in an amount of from 1 to 20 wt.-%,
(iiia) the at least one inorganic binder in an amount of from 45 to 80 wt.-%,
(iiib) the at least one alkaline activator in an amount of from 1 to 5 wt.-%, and
(iv) water in an amount of from10 to 50, preferably 20 to 40 wt.-%, and
wherein the wt.-% amounts are in each case based on the total weight of the suspension.

The invention also relates to a process for preparing the geopolymer construction material comprising the additive mixture according to the invention, and
(iii) at least one inorganic binder mixture comprising
   (iiia) at least one inorganic binder selected from the group consisting of latent hydraulic binders, pozzolanic binders, wherein the pozzolanic binders are selected from ground glass, metakaolin, aluminosilicates, fly ash, natural pozzolans such as tuff, trass and volcanic ash, natural and synthetic zeolites and mixtures thereof and mixtures thereof, and
   (iiib) at least one alkaline activator selected from the group consisting of alkali metal hydroxides, alkali metal carbonates, alkali metal fluorides, alkali metal aluminates, alkali metal silicates, and mixtures thereof; and
(iv) water,
   wherein the process comprises the steps of
   (1) mixing components (i), (ii), (iiia), (iiib) and (iv), and
   (2) hardening and optionally drying the resulting formulation.

Mixing is preferably performed be mechanical stirring. Preferably, the dry components of the mixture are mixed at first, and then the alkaline activator and water are added.

Hardening is preferably performed for at least 12 hours at a temperature in the range of from 0° C to 100° C, preferably from 20° C to 80° C.

Preferred embodiments regarding the additive mixture and the inorganic binder mixture have been defined above and also apply to the process of the invention.

In yet another embodiment, the invention relates to a geopolymer construction material obtainable by the above process.

In connection with the above mentioned geopolymer suspension and the process of the invention, it is to be understood that also various further additives may be used according to the present invention, such as retarders, accelerators, fillers, surfactants, pH modifiers, antifoaming agents and mixtures thereof. In a preferred embodiment, the at least one additive is selected from the group consisting of rheology modifiers, superplasticizers, retarders, accelerators, fillers, flame retardants, and mixtures thereof.

The setting time of geopolymer construction material can be prolonged / shortened by the addition of certain compounds called retarders / accelerators. Retarders can be divided into the groups of lignosulfonates, cellulose derivatives, hydroxyl carboxylic acids, organophosphates, synthetic retarders, and inorganic compounds. Non-limiting examples of retarders are hydroxyethyl cellulose, carboxymethyl hydroxyethyl cellulose, citric acid, tartaric acid, gluconic acid, glucoheptonate, maleic anhydride, 2-Acrylamido-2-methylpropanesulfonic acid (AMPS) copolymers, borax, boric acid, and ZnO. Non-limiting examples of accelerators are CaCl₂, KCl, Na₂SiO₃, NaOH, Ca(OH)₂, and CaO x Al₂O₃, lithium silicate, potassium silicate, and aluminum salts, such as aluminum sulfate.

The term "filler" refers primarily to materials that can be added to increase the volume without impairing the properties of the geopolymer construction material. The fillers mentioned can be selected from the group consisting of quartz sand or powdered quartz, calcium carbonate, rock flour, low-density fillers (for example vermiculite, perlite, diatomaceous earth, mica, talc powder, magnesium oxide, foamed glass, hollow spheres, foam sand, clay, polymer particles), pigments (e.g. titanium dioxide), high density fillers (e.g. barium sulphate), metal salts (e.g. zinc salts, calcium salts, etc.), and mixtures thereof. Grain sizes suitable here are in particular up to 500 µm. It is particularly preferable that the average grain size of the foamed glass is up to 300 *µ*m.

Surfactants, which may be used in addition to the amphiphilic compounds as defined herein, include non-ionic surfactants, anionic surfactants, cationic surfactants, zwitterionic surfactants and proteins or synthetic polymers.

Non-ionic surfactants include fatty alcohols, cetyl alcohol, stearyl alcohol, and cetostearyl alcohol (comprising predominantly cetyl and stearyl alcohols), and oleyl alcohol. Further examples include polyethylene glycol alkyl ethers CH₃-(CH₂)₁₀₋₁₆-(O-C₂H₄)₁₋₂₅-OH such as octaethylene glycol monododecyl ether or pentaethylene glycol monododecyl ether; polypropylene glycol alkyl ethers CH₃-(CH₂)₁₀₋₁₆-(O-C₃H₆)₁₋₂₅-OH; glucoside alkyl ethers CH₃-(CH₂)₁₀₋₁₆-(O-Glucoside)₁₋₃-OH such as decyl glucoside, lauryl glucoside, octyl glucoside; polyethylene glycol octylphenyl ethers C₈H₁₇-(C₆H₄)-(O-C₂H₄)₁₋₂₅-OH such as Triton X-100; polyethylene glycol alkylphenyl ethers C₉H₁₉-(C₆H₄)-(O-C₂H₄)₁₋₂₅-OH such as nonoxynol-9; glycerol alkyl esters such as glyceryl laurate; polyoxyethylene glycol sorbitan alkyl esters such as polysorbate; sorbitan alkyl esters such as spans; cocamide MEA, cocamide DEA; dodecyldimethylamine oxide; block copolymers of polyethylene glycol and polypropylene glycol such as poloxamers; polyethoxylated tallow amine (POEA). Preferred non-ionic surfactants also include alkyl polyglucosides. Alkyl polyglucosides generally have the formula H-(C₆H₁₀O₅)ₘ-O-R¹, where (C₆H₁₀O₅) is a glucose unit and R¹ is a C₆-C₂₂-alkyl group, preferably a C₈-C₁₆-alkyl group and in particular a C₈-C₁₂-alkyl group, and m = from 1 to 5.

Anionic surfactants contain anionic functional groups at their head, such as sulfate, sulfonate, phosphate, and carboxylate. Prominent alkyl sulfates include ammonium lauryl sulfate, sodium lauryl sulfate (sodium dodecyl sulfate, SLS, or SDS), and the related alkylether sulfates sodium laureth sulfate (sodium lauryl ether sulfate or SLES), and sodium myreth sulfate. Others include docusate (dioctyl sodium sulfosuccinate), perfluorooctanesulfonate (PFOS), perfluorobutanesulfonate, alkyl-aryl ether phosphates, alkyl ether phosphates. Preferred carboxylates include alkyl carboxylates, such as sodium stearate. More specialized species include sodium lauroyl sarcosinate and carboxylate-based fluorosurfactants such as perfluorononanoate, perfluorooctanoate (PFOA or PFO).

Cationic surfactants include, dependent on the pH, primary, secondary, or tertiary amines: Primary and secondary amines become positively charged at pH < 10. An example is octenidine dihydrochloride. Furthermore, cationic surfactants include permanently charged quaternary ammonium salts, such as cetrimonium bromide (CTAB), cetylpyridinium chloride (CPC), benzalkonium chloride (BAC), benzethonium chloride (BZT), dimethyldioctadecylammonium chloride, dioctadecyldimethylammonium bromide (DODAB).

Zwitterionic (amphoteric) surfactants have both cationic and anionic centers attached to the same molecule. The cationic part is based on primary, secondary, or tertiary amines or quaternary ammonium cations. The anionic part can be more variable and include sulfonates, as in the sultaines CHAPS (3-[(3-Cholamidopropyl)dimethylammonio]-1-propanesulfonate) and cocamidopropyl hydroxysultaine. Betaines such as cocamidopropyl betaine have a carboxylate with the ammonium. The most common biological zwitterionic surfactants have a phosphate anion with an amine or ammonium, such as the phospholipids phosphatidylserine, phosphatidylethanolamine, phosphatidylcholine, and sphingomyelins. Non-limiting examples of proteins are bovine serum albumin, egg ovalbumin, milk caseins or beta-lactoglobulin.

The proportion of the surfactant, based on the geopolymer construction material of the invention, can vary over a broad range. Preferably, the surfactant is present in an amount of up to 2.5 % by weight, preferably up to 1.5 % by weight based on the total solids weight of the geopolymer construction material.

The term "pH modifier" refers to an alkaline or acidic agent and includes mineral and organic acids as well as inorganic and organic bases.

The present invention is further illustrated by the following examples

### Examples

The ingredients were mixed with a mortar mixer according to DIN EN 196-1 (November 2016). However, in contrast to the procedure described in DIN EN 196-1 (November 2016), the quartz sand was added as initial ingredient to the mixer and not at the end. Sodium silicate was used as alkaline activator. The dispersant was obtained according to Example 26 of EP 2 853 550 A1 and used as an aqueous solution. Two different types of microsilica were used: Microsilica A is from the Si-production (comparative example) and microsilica B is from the Zr-production.

### Example 1:

Three mortar compositions M1-M4 were obtained (cf. Table 1). The distribution of the Hägermann cone was determined according to DIN EN 1015-3 (May 2007) after 10 and 20 minutes by knocking 15 times. All ingredient units are given in grams; the mortar spread is given in cm.

**Table 1**

| **Ingredients** | **M1** | **M2** | **M3** | **M4** |
|---|---|---|---|---|
| Fly ash (class F) | 150 | 150 | 142.5 | 142.5 |
| Blast furnace slag | 150 | 150 | 142.5 | 142.5 |
| Microsilica A (comparative example | 0 | 0 | 15 | 0 |
| Microsilica B | 0 | 0 | 0 | 15 |
| Dispersant | 0 | 1.5 | 1.5 | 1.5 |
| Quarz sand | 700 | 700 | 700 | 700 |
| Na-Silicate solution (11 wt.-%) | 136 | 136 | 136 | 136 |
| Spread after 10 min | 16 | 17 | 21 | 24 |
| Spread after 20 min | 15 | 19 | 22 | 26 |

## Claims

1. An additive mixture for improving the flowability of a geopolymer suspension comprising
(i) at least one cationic polymer (i), wherein the at least one cationic polymer (i) comprises
a) 1 to 99 mol-% of a cationic structural unit of formula (I) 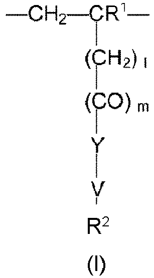 wherein
R¹ in each occurrence is the same or different and represents hydrogen and/or methyl,
R² in each occurrence is the same or different and is selected from the group consisting of 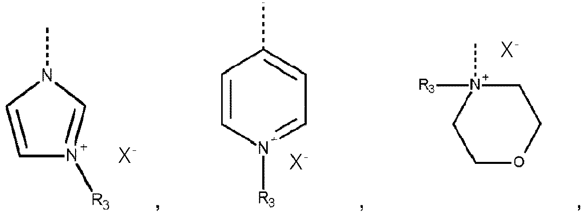 and/or 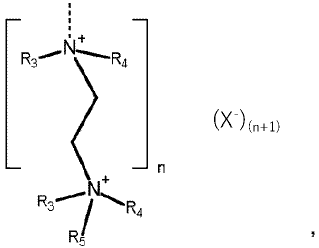 wherein
R³, R⁴, and R⁵ in each occurrence are the same or different and each independently represent hydrogen, an aliphatic hydrocarbon moiety having 1 to 20 carbon atoms, a cycloaliphatic hydrocarbon moiety having 5 to 8 carbon atoms, aryl having 6 to 14 carbon atoms and/or a polyethylene glycol (PEG) moiety,
I in each occurrence is the same or different and represents an integer from 0 to 2,
m in each occurrence is the same or different and represents 0 or 1,
n in each occurrence is the same or different and represents an integer from 0 to 10,
Y in each occurrence is the same or different and represents an absent group, oxygen, NH, and/or NR³,
V in each occurrence is the same or different and represents -(CH₂)ₓ-, 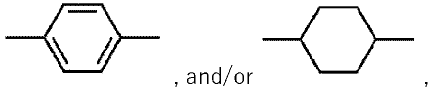 wherein x in each occurrence is the same or different and represents an integer from 0 to 6, and
X in each occurrence is the same or different and represents a halogen atom, a C₁-C₄-alkyl sulfate, a C₁-C₄-alkyl sulfonate, a C₆-C₁₄-(alkyl)aryl sulfonate and/or a monovalent equivalent of a polyvalent anion, which is selected from a sulfate, a disulfate, a diphosphate, a triphosphate, and/or a polyphosphate; and optionally
b) 1 to 99 mol-% of a macromonomeric structural unit of formula (II) 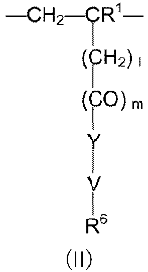 wherein
R⁶ in each occurrence is the same or different and represents a polyoxyalkylene group of the following formula (IIa) 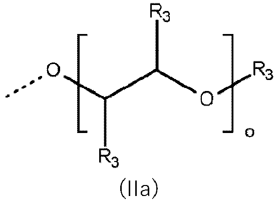 wherein
o in each occurrence is the same or different and represents an integer from 1 to 300, and
R¹, R³, I, m, Y, V, and x have the meanings given above,
provided that in both structural units (I) and (II), Y represents an absent group when x is 0;
and
(ii) zirconium-containing microsilica.

2. The mixture according to claim 1, wherein the microsilica contains from 0.05 to 10 wt.- %, preferably from 0.1 to 5 wt.-%, of ZrO₂.

3. The mixture according to claim 1 or 2, wherein the microsilica is obtained from zirconium production.

4. The mixture according to any one of claims 1 to 3, wherein the zirconium-containing microsilica comprises particles having a specific surface area of from 5 to 30 m²g⁻¹, preferably determined according to DIN ISO 9277 (January 2014).

5. The mixture according to any one of clams 1 to 4 comprising the cationic polymer (i) and the zirconium-containing microsilica (ii) in a weight ratio of from 1:3 to 1:200, preferably from 1:5 to 1:100.

6. A geopolymer suspension comprising the mixture according to any one of claims 1 to 5, and
(iii) at least one inorganic binder mixture comprising
(iiia) at least one inorganic binder selected from the group consisting of latent hydraulic binders, pozzolanic binders, and mixtures thereof, wherein the pozzolanic binders are selected from ground glass, metakaolin, aluminosilicates, fly ash, natural pozzolans such as tuff, trass and volcanic ash, natural and synthetic zeolites and mixtures thereof, and
(iiib) at least one alkaline activator selected from the group consisting of alkali metal hydroxides, alkali metal carbonates, alkali metal fluorides, alkali metal aluminates, alkali metal silicates, and mixtures thereof; and
(iv) water.

7. The geopolymer suspension according to claim 6, wherein the at least one inorganic binder is selected from the group consisting of blast furnace slag, metakaolin, aluminosilicates, fly ash, and mixtures thereof.

8. The geopolymer suspension according to claim 6 or 7 comprising
(i) the cationic polymer in an amount of from 0.01 to 10 wt.-%,
(ii) the zirconium-containing microsilica in an amount of from 1 to 20 wt.-%,
(iiia) the at least one inorganic binder in an amount of from 45 to 80 wt.-%,
(iiib) the at least one alkaline activator in an amount of from 1 to 5 wt.-%, and
(iv) water in an amount of from 10 to 50, preferably 20 to 40 wt.-%, and
wherein the wt.-% amounts are in each case based on the total weight of the suspension.

9. A process for preparing a geopolymer construction material comprising the mixture according to any one of claims 1 to 5, and
(iii) at least one inorganic binder mixture comprising
(iiia) at least one inorganic binder selected from the group consisting of latent hydraulic binders, pozzolanic binders, and mixtures thereof, wherein the pozzolanic binders are selected from ground glass, metakaolin, aluminosilicates, fly ash, natural pozzolans such as tuff, trass and volcanic ash, natural and synthetic zeolites and mixtures thereof, and
(iiib) at least one alkaline activator selected from the group consisting of alkali metal hydroxides, alkali metal carbonates, alkali metal fluorides, alkali metal aluminates, alkali metal silicates, and mixtures thereof; and
(iv) water,
wherein the process comprises the steps of
(1) mixing components (i), (ii), (iiia), (iiib) and (iv), and
(2) hardening and optionally drying the resulting formulation.

10. A geopolymer construction material obtainable by the process according to claim 9.

## Patentansprüche

1. Additivmischung zur Verbesserung der Fließfähigkeit einer Geopolymersuspension, umfassend
(i) mindestens ein kationisches Polymer (i), wobei das mindestens eine kationische Polymer (i)
a) 1 bis 99 Mol-% einer kationischen Struktureinheit der Formel (I) 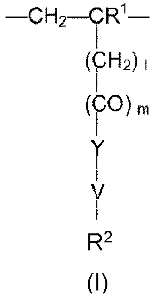 wobei
R¹ bei jedem Auftreten gleich oder verschieden ist und für Wasserstoff und/oder Methyl steht,
R² bei jedem Auftreten gleich oder verschieden ist und aus der Gruppe bestehend aus 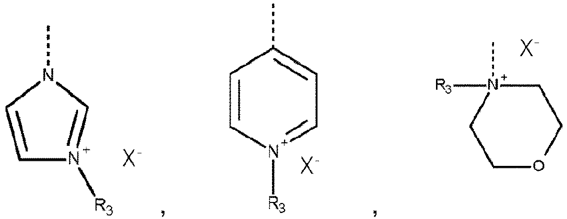 und/oder 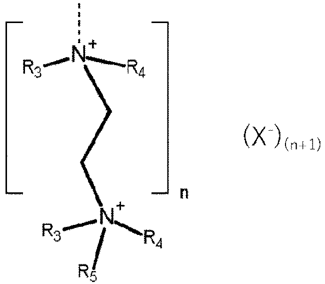 ausgewählt ist, wobei
R³, R⁴ und R⁵ bei jedem Auftreten gleich oder verschieden sind und unabhängig voneinander jeweils für Wasserstoff, eine aliphatische Kohlenwasserstoff gruppierung mit 1 bis 20 Kohlenstoffatomen, eine cycloaliphatische Kohlenwasserstoffgruppierung mit 5 bis 8 Kohlenstoffatomen, Aryl mit 6 bis 14 Kohlenstoffatomen und/oder eine Polyethylenglykol-(PEG)-Gruppierung stehen,
1 bei jedem Auftreten gleich oder verschieden ist und für eine ganze Zahl von 0 bis 2 steht,
m bei jedem Auftreten gleich oder verschieden ist und für 0 oder 1 steht,
n bei jedem Auftreten gleich oder verschieden ist und für eine ganze Zahl von 0 bis 10 steht,
Y bei jedem Auftreten gleich oder verschieden ist und für eine fehlende Gruppe, Sauerstoff, NH und/oder NR³ steht,
V bei jedem Auftreten gleich oder verschieden ist und für -(CH₂)ₓ-, 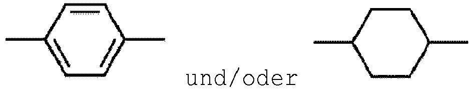 steht, wobei
x bei jedem Auftreten gleich oder verschieden ist und für eine ganze Zahl von 0 bis 6 steht, und
X bei jedem Auftreten gleich oder verschieden ist und für ein Halogenatom, ein C₁-C₄-Alkylsulfat, ein C₁-C₄-Alkylsulfonat, ein C₆-C₁₄-(Alk)arylsulfonat und/oder ein einwertiges Äquivalent eines mehrwertigen Anions, das aus einem Sulfat, einem Disulfat, einem Diphosphat, einem Triphosphat und/oder einem Polyphosphat ausgewählt ist, steht; und gegebenenfalls
b) 1 bis 99 Mol-% einer makromonomeren Struktureinheit der Formel (II) 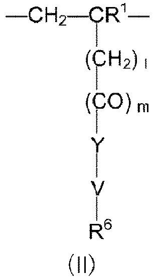 wobei
R⁶ bei jedem Auftreten gleich oder verschieden ist und für eine Polyoxyalkylengruppe der folgenden Formel (1Ia) 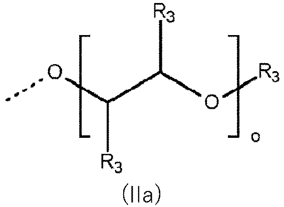 steht, wobei
o bei jedem Auftreten gleich oder verschieden ist und für eine ganze Zahl von 1 bis 300 steht und
R¹, R³, 1, m, Y, V und x die oben angegebenen Bedeutungen besitzen,
mit der Maßgabe, dass in beiden Struktureinheiten (I) und (II) Y für eine fehlende Gruppe steht, wenn
x gleich 0 ist; umfasst;
und
(ii) zirconiumhaltiges Mikrosilika.

2. Mischung nach Anspruch 1, wobei das Mikrosilika 0,05 bis 10 Gew.-%, vorzugsweise 0,1 bis 5 Gew.-%, ZrO₂ enthält.

3. Mischung nach Anspruch 1 oder 2, wobei das Mikrosilika aus der Zirconiumgewinnung stammt.

4. Mischung nach einem der Ansprüche 1 bis 3, wobei das zirconiumhaltige Mikrosilika Teilchen mit einer spezifischen Oberfläche von 5 bis 30 m²g⁻¹, vorzugsweise bestimmt gemäß DIN ISO 9277 (Januar 2014), aufweist.

5. Mischung nach einem der Ansprüche 1 bis 4, umfassend das kationische Polymer (i) und das zirconiumhaltige Mikrosilika (ii) in einem Gewichtsverhältnis von 1:3 bis 1:200, vorzugsweise von 1:5 bis 1:100.

6. Geopolymersuspension, umfassend die Mischung nach einem der Ansprüche 1 bis 5 und
(iii) mindestens eine anorganische Bindemittelmischung, umfassend
(iiia) mindestens ein anorganisches Bindemittel, das aus der Gruppe bestehend aus latenten hydraulischen Bindemitteln, puzzolanischen Bindemitteln und Mischungen davon ausgewählt ist, wobei die puzzolanischen Bindemittel aus Glasmehl, Metakaolin, Aluminiumsilikaten, Flugasche, natürlichen Puzzolanen wie Tuff, Trass und Vulkanasche, natürlichen und synthetischen Zeolithen und Mischungen davon ausgewählt sind, und
(iiib) mindestens einen alkalischen Aktivator, der aus der Gruppe bestehend aus Alkalimetallhydroxiden, Alkalimetallcarbonaten, Alkalimetallfluoriden, Alkalimetallaluminaten, Alkalimetallsilikaten und Mischungen davon ausgewählt ist; und
(iv) Wasser.

7. Geopolymersuspension nach Anspruch 6, wobei das mindestens eine anorganische Bindemittel aus der Gruppe bestehend aus Hochofenschlacke, Metakaolin, Aluminosilikaten, Flugasche und Mischungen davon ausgewählt ist.

8. Geopolymersuspension nach Anspruch 6 oder 7, umfassend
(i) das kationische Polymer in einer Menge von 0,01 bis 10 Gew.-%,
(ii) das zirconiumhaltige Mikrosilika in einer Menge von 1 bis 20 Gew.-%,
(iiia) das mindestens eine anorganische Bindemittel in einer Menge von 45 bis 80 Gew.-%,
(iiib) den mindestens einen alkalischen Aktivator in einer Menge von 1 bis 5 Gew.-% und
(iv) Wasser in einer Menge von 10 bis 50 Gew.-%, vorzugsweise 20 bis 40 Gew.-%, und
wobei sich die Gew.-%-Mengen jeweils auf das Gesamtgewicht der Suspension beziehen.

9. Verfahren zur Herstellung eines Geopolymer-Baustoffs, umfassend die Mischung nach einem der Ansprüche 1 bis 5 und
(iii) mindestens eine anorganische Bindemittelmischung, umfassend
(iiia) mindestens ein anorganisches Bindemittel, das aus der Gruppe bestehend aus latenten hydraulischen Bindemitteln, puzzolanischen Bindemitteln und Mischungen davon ausgewählt ist, wobei die puzzolanischen Bindemittel aus Glasmehl, Metakaolin, Aluminiumsilikaten, Flugasche, natürlichen Puzzolanen wie Tuff, Trass und Vulkanasche, natürlichen und synthetischen Zeolithen und Mischungen davon ausgewählt sind, und
(iiib) mindestens einen alkalischen Aktivator, der aus der Gruppe bestehend aus Alkalimetallhydroxiden, Alkalimetallcarbonaten, Alkalimetallfluoriden, Alkalimetallaluminaten, Alkalimetallsilikaten und Mischungen davon ausgewählt ist; und
(iv) Wasser,
wobei das Verfahren die Schritte
(1) Mischen der Komponenten (i), (ii), (iiia), (iiib) und (iv) und
(2) Härten und gegebenenfalls Trocken der resultierenden Formulierung umfasst.

10. Geopolymer-Baustoff, der durch das Verfahren nach Anspruch 9 erhältlich ist.

## Revendications

1. Mélange d'additifs pour l'amélioration de l'aptitude à l'écoulement d'une suspension de géopolymère comprenant
(i) au moins un polymère cationique (i), l'au moins un polymère cationique (i) comprenant
a) 1 à 99 % en moles d'un motif structural cationique de formule (I) 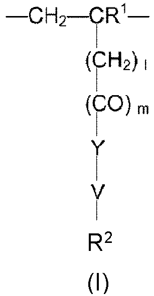
R¹ étant en chaque occurrence identique ou différent et représentant hydrogène et/ou méthyle,
R² étant en chaque occurrence identique ou différent et étant choisi dans le groupe constitué par 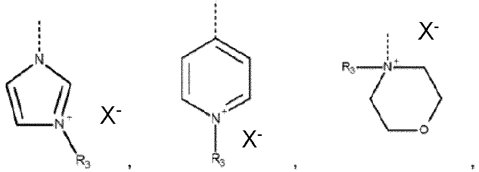 et/ou 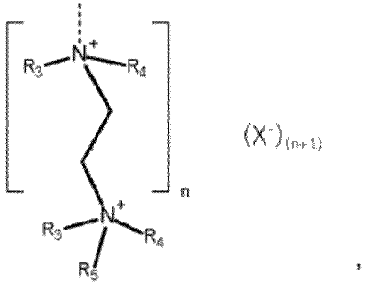
R³, R⁴ et R⁵ étant en chaque occurrence identiques ou différents et représentant chacun indépendamment hydrogène, un groupement hydrocarboné aliphatique ayant 1 à 20 atomes de carbone, un groupement hydrocarboné cycloaliphatique ayant 5 à 8 atomes de carbone, aryle ayant 6 à 14 atomes de carbone et/ou un groupement polyéthylène glycol (PEG),
1 étant en chaque occurrence identique ou différent et représentant un entier de 0 à 2,
m étant en chaque occurrence identique ou différent et représentant 0 ou 1,
n étant en chaque occurrence identique ou différent et représentant un entier de 0 à 10,
Y étant en chaque occurrence identique ou différent et représentant un groupe absent, oxygène, NH et/ou NR³,
V étant en chaque occurrence identique ou différent et représentant -(CH₂)ₓ-, 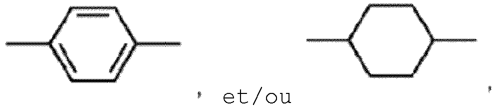
x étant en chaque occurrence identique ou différent et représentant un entier de 0 à 6, et
X étant en chaque occurrence identique ou différent et représentant un atome d'halogène, un sulfate d'alkyle en C₁₋₄, un sulfonate d'alkyle en C₁₋₄, un sulfonate d' (alkyl) aryle en C₆-₁₄ et/ou un équivalent monovalent d'un anion polyvalent, qui est choisi parmi un sulfate, un disulfate, un diphosphate, un triphosphate et/ou polyphosphate ; et éventuellement
b) 1 à 99 % en moles d'un motif structural macromonomérique de formule (II) 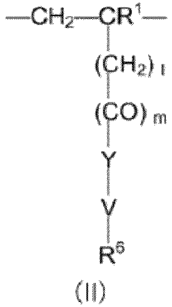
R⁶ étant identique ou différent en chaque occurrence et représentant un groupe polyoxyalkylène de la formule suivante (IIa) 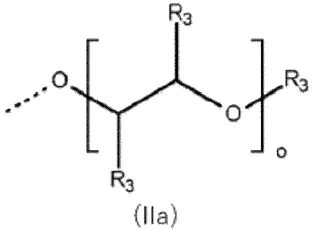
o étant identique ou différent en chaque occurrence et représentant un entier de 1 à 300, et
R¹, R³, 1, m, Y, V et x possédant les significations données ci-dessus, étant entendu que dans les deux motifs structuraux (I) et (II), Y représente un groupe absent lorsque x est 0 ; et
(ii) une microsilice contenant du zirconium.

2. Mélange selon la revendication 1, la microsilice contenant de 0,05 à 10 % en poids, préférablement de 0,1 à 5 % en poids, de ZrO₂.

3. Mélange selon la revendication 1 ou 2, la microsilice étant obtenue d'une production de zirconium.

4. Mélange selon l'une quelconque des revendications 1 à 3, la microsilice contenant du zirconium comprenant des particules ayant une superficie spécifique allant de 5 à 30 m²g⁻¹, préférablement déterminée selon la norme DIN ISO 9277 (janvier 2014) .

5. Mélange selon l'une quelconque des revendications 1 à 4 comprenant le polymère cationique (i) et la microsilice contenant du zirconium (ii) en un rapport en poids allant de 1 : 3 à 1 : 200, préférablement de 1 : 5 à 1 : 100.

6. Suspension de géopolymère comprenant le mélange selon l'une quelconque des revendications 1 à 5, et
(iii) au moins un mélange de liant inorganique comprenant
(iiia) au moins un liant inorganique choisi dans le groupe constitué par des liants hydrauliques latents, des liants pouzzolaniques, et des mélanges correspondants, les liants pouzzolaniques étant choisis parmi le verre pilé, le métakaolin, des aluminosilicates, des cendres volantes, des pouzzolanes naturelles telles que le tuf, le trass et les cendres volcaniques, des zéolithes naturelles et synthétiques et des mélanges correspondants et
(iiib) au moins un activateur alcalin choisi dans le groupe constitué par des hydroxydes de métal alcalin, des carbonates de métal alcalin, des fluorures de métal alcalin, des aluminates de métal alcalin, des silicates de métal alcalin, et des mélanges correspondants ; et
(iv) de l'eau.

7. Suspension de géopolymère selon la revendication 6, l'au moins un liant inorganique étant choisi dans le groupe constitué par le laitier de haut-fourneau, le métakaolin, des aluminosilicates, des cendres volantes, et des mélanges correspondants.

8. Suspension de géopolymère selon la revendication 6 ou 7 comprenant
(i) le polymère cationique en une quantité allant de 0,01 à 10 % en poids,
(ii) la microsilice contenant du zirconium en une quantité allant de 1 à 20 % en poids,
(iiia) l'au moins un liant inorganique en une quantité allant de 45 à 80 % en poids,
(iiib) l'au moins un activateur alcalin en une quantité allant de 1 à 5 % en poids, et
(iv) de l'eau en une quantité allant de 10 à 50, préférablement de 20 à 40 % en poids, et
les quantités en % en poids étant en chaque cas basées sur le poids total de la suspension.

9. Procédé pour la préparation d'un matériau de construction de géopolymère comprenant le mélange selon l'une quelconque des revendications 1 à 5, et
(iii) au moins un mélange de liant inorganique comprenant
(iiia) au moins un liant inorganique choisi dans le groupe constitué par des liants hydrauliques latents, des liants pouzzolaniques, et des mélanges correspondants, les liants pouzzolaniques étant choisis parmi le verre pilé, le métakaolin, des aluminosilicates, des cendres volantes, des pouzzolanes naturelles telles que le tuf, le trass et les cendres volcaniques, des zéolithes naturelles et synthétiques et des mélanges correspondants et
(iiib) au moins un activateur alcalin choisi dans le groupe constitué par des hydroxydes de métal alcalin, des carbonates de métal alcalin, des fluorures de métal alcalin, des aluminates de métal alcalin, des silicates de métal alcalin, et des mélanges correspondants ; et
(iv) de l'eau,
le procédé comprenant les étapes de
(1) mélange des composants (i), (ii), (iiia), (iiib) et (iv), et
(2) durcissement et éventuellement séchage de la formulation résultante.

10. Matériau de construction de géopolymère pouvant être obtenu par le procédé selon la revendication 9.
